Europäisches Patentamt

European Patent Office

Office européen des brevets

(11) Veröffentlichungsnummer: **0 270 670 B1**

# EUROPÄISCHE PATENTSCHRIFT

(45) Veröffentlichungstag der Patentschrift: **02.09.92**

(21) Anmeldenummer: **87905726.3**

(22) Anmeldetag: **25.06.87**

(86) Internationale Anmeldenummer:
**PCT/EP87/00334**

(87) Internationale Veröffentlichungsnummer:
**WO 88/00251 (14.01.88 88/02)**

(51) Int. Cl.⁵: **C23C 30/00**, C23C 4/06,
F16C 33/12, F16C 33/14

(54) **LAGERMETALLSCHICHT UND VERFAHREN ZU DEREN HERSTELLUNG.**

(30) Priorität: **25.06.86 DE 3621184**

(43) Veröffentlichungstag der Anmeldung:
**15.06.88 Patentblatt 88/24**

(45) Bekanntmachung des Hinweises auf die
Patenterteilung:
**02.09.92 Patentblatt 92/36**

(84) Benannte Vertragsstaaten:
**CH DE FR GB IT LI NL SE**

(56) Entgegenhaltungen:
**EP-A- 0 165 565**
**FR-A- 2 207 193**
**GB-A- 2 130 250**
**US-A- 3 950 141**

(73) Patentinhaber: **GLYCO AG**
**Stielstrasse 11**
**W-6200 Wiesbaden(DE)**

(84) Benannte Vertragsstaaten:
**CH DE GB LI**

(73) Patentinhaber: **Plasmainvent AG**

**Grabenstrasse 25**
**CH-6340 Baar(CH)**

(84) Benannte Vertragsstaaten:
**CH DE FR GB IT LI NL SE**

(72) Erfinder: **HODES, Erich**
**Helgebornstrasse 52**
**W-6365 Rosbach v.d. Höhe 3 (Rodheim)(DE)**
Erfinder: **ENGEL, Ulrich**
**Breslauer Strasse 2a**
**W-6208 Bad Schwalbach(DE)**
Erfinder: **GRUNER, Heiko**
**Kehlenstrasse 1014**
**CH-5712 Beinwil am See(CH)**

(74) Vertreter: **Lehn, Werner, Dipl.-Ing. et al**
**Hoffmann, Eitle & Partner Patentanwälte Arabellastrasse 4**
**W-8000 München 81(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 270 670 B1**

**Beschreibung**

Die Erfindung bezieht sich auf ein Verfahren zum Aufbringen einer Lagermetallschicht aus einer Suspensionslegierung auf ein Trägerelement, bei welchem die Legierungsbestandteile im Plasmaspritzverfahren in Pulverform in den Plasmastrahl eingeführt werden und die Pulverteilchen im Plasmastrahl aufgeschmolzen und legiert werden, und auf eine nach einem solchen Verfahren auf ein Trägerelement aufgebrachte Lagermetallschicht. Lagermetallschichten werden als Funktionsschichten in sehr unterschiedlichen Einsatzgebieten verwendet.

Die heute bekanntesten Auskleideverfahren zur Herstellung von Halbzeugen, Gleitlagern oder Lagerelementen mit Lagermetallschichten aus Dispersionslegierungen sind Gußtechniken (Z.B. Schleuder- oder Standguß) und Beschichtungsverfahren (Flamm- oder Lichtbogen- oder Plasma-Spritzen, Kathodenzerstäuben und Aufdampfen). Unterschiedliche Verfahren sind zunächst deshalb entstanden, weil Gleitlager oder Lagerelemente mit Gleitschichten aus Dispersionslegierungen sehr verschieden in Form und Abmessung hergestellt werden müssen. Lagerbuchsen mit einem Innendurchmeser größer als 1200 mm oder Gleitelemente in Form von Kugelkolben oder Kugelpfannen können nicht im Schleudergußverfahren beschichtet werden.

Hierfür bevorzugt eingesetzt wird der Standguß. Auch die notwendige Dicke der Lagermetallschicht nimmt wesentlichen Einfluß auf die Wahl des Beschichtungsverfahrens. Dünne, nur etwa 20 $\mu$m starke Lagermetallschichten können z.B. durch Kathodenzerstäubung direkt auf die hierfür geeignet vorbereitete Lageroberfläche aufgebracht werden. Für größere Schichtdicken ist dieses Verfahren zu kostenintensiv.

Der Hauptgrund für die Verwendung unterschiedlicher Aufbringverfahren liegt in der spezifischen Schichtstruktur von Dispersionslegierungen. Sie sind im festen Zustand nicht legiert, sondern bilden ein mechanisches Gemenge reiner Stoffe verschiedener Kristallitgrößen. Die innere Gefügeausbildung der Lagermetallschichten ist ganz entscheidend für die Dauerfestigkeit, Korrosionsbeständigkeit und Notlaufschmiereigenschaft des Lagers verantwortlich. Dies gilt insbesondere für das Schichtgefüge innerhalb der Mischungslücke von z.B. monotektischen Legierungen. Praktisch viele für die Gleitlagertechnik einsetzbaren Legierungen sind mit dem Nachteil der Mischungslücke behaftet. Also gilt es, durch spezielle Herstelltechniken die physikalische Zwangslage zu überspielen, Kompromisse zu schließen. Durch Einfügen (z.B. Dispersionshärten) weiterer Legierungsbestandteile gelingt es, den Nachteil geringerer Schichtstabilität aufgrund von z.B. fehlendem Pb-Gehalt in einer AlPb-Lagermetallschicht auszugleichen und so die Dauerfestigkeit der Lagerschicht zu erhöhen.

Um die Problematik der Herstellung von Lagermetallschichten zu zeigen, wird als Beispiel das Standgußverfahren für Bleibronzelager geschildert. Der zum Ausguß vorbereitete Stützkörper muß auf einem Gießtisch aufgebaut, verschraubt und abgedichtet werden. Unter Kontrolle der Temperatur wird der Stützkörper auf die bei etwa 1700°C liegende Gußtemperatur vorgewärmt. Unmittelbar nach dem Eingießen des CuPb-Lagermetalls erfolgt ein gezielter Wärmeentzug durch Wasserkühlung, um ein gerichtetes Erstarren der Schmelze zu verhindern und das Metall auf dem Stützkörper aufzuschrumpfen. Durch Pumpen gilt es, Gießschaum und Lufteinschlüsse an die Oberfläche zu befördern. Mittels Nachgießen wird der durch Schrumpfung sinkende Metallspiegel ergänzt. Der Abkühlprozeß ist für monotektische Legierungen besonders kritisch, da die Schichtgefügeausbildung die Dauerfestigkeit bestimmt. Aufgrund der Dicke der Gußschicht sind lange Abkühlzeiten unvermeidlich. Sie beeinträchtigen die Bindung zum Stützkörper, verhindern ein homogenes Gefüge. Die zwangsweise Bildung von Kupferkristallen bringt die Gefahr vertikaler Transkristallisation vom Boden bis zur Schichtoberfläche mit sich. Diese Stengelkristalle neigen dazu, beginnende oberflächliche Dauerbruchanrisse bis zur Substratoberfläche zu leiten und so die Lebensdauer des Gleitlagers stark einzuschränken. Auch gröbere, zeilenförmige Pb-Ausscheidungen, welche die innere Strukturstabilität des Lagers gefährden, können praktisch nur durch schroffe Abschreckung vermieden werden, was besonders bei sehr großen Stützkörpern nicht möglich ist.

Ohne auf die ebenso gewichtigen Nachteile des Schleudergießens einzugehen (genannt sei nur z.B. das Problem der Schwerkraftentmischung bei größeren Stützkörpern), wird verständlich, warum schon sehr frühzeitig Versuche unternommen wurden, die Probleme der Gußtechniken pulvermetallurgisch oder durch Beschichtungsverfahren zu überwinden.

Erste Fortschritte konnten mit walzplattierten Lagermetallschichten erzielt werden. Aus der DE-OS 17 75 322 ist ein Dreischichtlager bekannt, bei welchem durch Pulverwalzen und anschließende Sinterverdichtung ein AlPb-Lagerwerkstoff mit Si-, Sn- und Cu-Bestandteilen in schon sehr feiner Komponentenverteilung hergestellt werden konnte. Gleiteigenschaften und Dauerstandfestigkeit so hergestellter Lager sind deutlich verbessert, der Herstellprozeß allerdings auch kostenintensiv. Die durch die Walztechnik verursachte ausgeprägte Lamellenstruktur dieser Lagermetallschicht begrenzt ihre Belastbarkeit.

Die Vorteile relativ homogener Komponentenverteilung in Pulverteilchen aus Dispersionslegierungen

2

nützend, wurden mit Hilfe der thermischen Spritztechnik Lagermetallschichten hergestellt. Aus DE-OS 26 56 203 ist ein Gleitlagerelement bekannt, bestehend aus einer durch Flamm-, Lichtbogen- oder Plasma-Spritzen aufgebrachten metallischen Disperionslegierung mit nachträglicher mechanischer Verdichtung. Einen ähnlichen Schichtverbund beschreibt die GB-PS 20 83 003, wobei mit getrennter Spritzvorrichtung Metalle mit stark unterschiedlichen Gewichten in der Lagermetallschicht gemischt werden. Eine Weiterentwicklung stellt DE-OS 32 42 543 vor, wobei in der Lagermetallschicht als Funktionsschicht aus metallischer Dispersionslegierung das Verhältnis der Legierungsbestandteile über die Schichtdicke variiert. Dort wurde auf einen Stahlträger eine Gleitschicht aus einer Al-Pb-Suspensionslegierung mit einem Pb-Gehalt von 20 Gew.-% in der äußersten Schicht durch Plasmaspritzen von Al- bzw. Pb-Pulver aufgetragen. Die dabei erzielte Spritzschicht ist nahezu porenfrei und ist auf dem Substrat rasch abgekühlt.

Trotz guter technischer Perspektiven sind alle bisher durch thermisches Spritzen an Luft hergestellten Lagermetallschichten nicht großtechnisch genutzt worden. Das liegt an einer Reihe unvermeidbarer Nachteile.

Alle bekannten Lagermetall-Legierungen wie AlPb, AlSn oder CuPb sind sehr reaktiv und leicht oxidierbar. Die Spritzschichten zeigen deshalb alle eine ausgeprägte Laminarstruktur. Die Spritzpulverpartikel reagieren an der Oberfläche mit dem Luftsauerstoff, so daß nach dem Aufprallen auf der Stützkörperoberfläche die einzelnen fladenförmigen Schichtportionen durch dünne Oxidhäute voneinander abgegrenzt sind. Bei dynamischer Beanspruchung erfolgt in diesen Grenzflächen ein frühzeitiges Versagen.

Durch die teilweise Aufoxidation der Lagermetall-Legierung wird gleichzeitig die Schichthärte unkontrollierbar erhöht, so daß die für Gleit- und Reibpartner notwendige Anpassungsfähigkeit während der Einlaufperiode verloren geht. Solche Lager neigen in hohem Maße zum Fressen. Ihre Einbettfähigkeit für Fremdpartikel geht ebenfalls verloren und es tritt vermehrt Riefen- bildung in den Gleitflächen auf.

Als zusätzlicher entscheidender Nachteil haben alle bisher durch thermisches Spritzen aufgebrachten Lagermetallschichten eine herstellbedingte Schichtporosität bis zu 10%, je nach Spritzverfahren und Wahl der Spritzpulver. Zur Schwächung der Dauerfestigkeit infolge Lamellenstruktur addiert sich die innere Kerbwirkung an Porositäten.

Ein weiterer wesentlicher Mangel ist die eingeschränkte Haftkraft aller bisher aufgespritzten Lagermetallschichten. Trotz Aufrauhung der Stützkörperoberfläche haften Lagermetallschichten durch ihre Teiloxidation nicht ausreichend. Eine Erhöhung der Substrattemperatur während der Beschichtung zur Verbesserung der Haftkraft ist nicht möglich, da die Stützkörpermaterialien selbst oxidationsgefährdet sind.

Der Erfindung liegt demnach die Aufgabe zugrunde, eine Lagermetallschicht der eingangs beschriebenen Art zu schaffen, welche hinsichtlich ihrer Struktur und ihrer Funktionseigenschaften, wie Gleit- und Reibeigenschaften, Temperaturbeständigkeit und Einbettfähigkeit für Fremdstoffteilchen sowie hinsichtlich ihrer Bindungseigenschaften zum Substrat wesentlich verbessert ist, sowie ein Verfahren zum Herstellen einer solchen Schicht zu schaffen.

Diese Aufgabe wird mit einer Lagermetallschicht aus einer Suspensionslegierung, die direkt oder über eine Zwischenschicht auf ein Trägerelement aufgebracht ist, wobei wenigstens zwei der metallischen Legierungsbestandteile eine Legierung mit einer Mischungslücke bilden und der in der Legierung dispergierte Stoff mit einem der beiden metallischen Legierungsbestandteile identisch ist, erfindungsgemäß dadurch gelöst,

- daß die Legierungsbestandteile im Bereich der Mischungslücken eine homogene, poren-, lamellen- und stengelkristallfreie Schicht bilden, in der die größten Abmessungen der Feinteilchen und Ausscheidungskristallite etwa 5 $\mu$m nicht überschreiten.

Es ergibt sich damit also eine Lagermetallschicht, in welcher

- alle Legierungsbestandteile möglichst homogen verteilt sind,
- die Schichtmatrix frei von Poren ist und möglichst Festkörperdichte aufweist,
- keine Lamellenstruktur oder Stengelkristalle vorhanden sind,
- die innere Strukturstabilität und die Haftkraft zur Stützkörperoberfläche genügend hoch ist.

Das erfindungsgemäße Verfahren zum Aufbringen einer Lagermetallschicht aus einer Suspensionslegierung auf ein Trägerelement, bei welchem die Legierungsbestand- teile im Plasmaspritzverfahren in Pulverform in den Plasmastrahl eingeführt werden und die Pulverteilchen im Plasmastrahl aufgeschmolzen und legiert werden, ist dadurch gekennzeichnet, daß die legierten Teilchen auf der Oberfläche des Trägerelements so rasch abgekühlt werden, daß die homogene Materialverteilung eingefroren wird, wobei die Lagermetallschicht vorteilhaft durch Vakuum-Plasma-Spritzen (VPS) hergestellt wird.

Dieses Verfahren erlaubt es, die Lagermetallschicht in beliebiger Dicke herzustellen. Nur so können die unterschiedlichsten Stützkörperoberflächen und Gleitlagerformen in einem einzigen Abscheideverfahren mit einer Lagermetallschicht versehen werden, welche in ihrer Struktur und Gleiteigenschaften optimal auf die spezifische Lagerbeanspruchung abgestimmt ist.

Die Funktionsschicht aus oxidationsempfindlichem Lagermetall wird im Vakuum-Plasma-Spritzverfahren (VPS) porenfrei und festhaftend auf einem beliebig gestalteten Stützkörper abgeschieden, unter Ausnützung der an sich bekannten Vorteile dieser Beschichtungstechnik, wie sie z.B. in der DE-OS 34 22 718 beschrieben sind. Als entscheidende Verbesserung zeichnen sich die erfindungsgemäß hergestellten Lagermetallschichten durch die sehr homogene Verteilung der Legierungsbestandteile aus, wie sie für Legierungen mit Mischungslücke bisher nur pulvermetallurgisch hergestellt werden konnten. Die in festem Zustand nicht legierbaren Schichtbestandteile bilden Kristallite deutlich unter 5 $\mu$m Größe. Dabei ist für ihre Feinverteilung in der erfindungsgemäßen Lagermetallschicht ein festgelegtes Mischungsverhältnis vorwählbar und mit großer Fertigungssicherheit einstellbar.

Die Lagermetallschicht ist zweckmäßig derart aufgebaut, daß das Mischungsverhältnis der Feinteilchen aus den Legierungsbestandteilen über die Dicke der Lagermetallschicht variiert ist.

Vorteilhaft erhält die Lagermetallschicht dem einen oder anderen Legierungsbestandteil anfänglich beigegebene oder beim Aufbau der Lagermetallschicht zusätzlich zugeführte Hartteilchen als dispersionsverfestigende Feinstteilchen in festgelegtem Beigabeverhältnis zur Erzielung der Lagermetallschicht und statistischer Verteilung.

Das Beigabeverhältnis der Hartteilchen beträgt zweckmäßig zwischen etwa 1 Vol.-% und etwa 5 Vol.-% bezogen auf das Volumen der Lagermetallschicht. Dabei kann das Beigabeverhältnis der Hartteilchen über die Dicke der Lagermetallschicht variiert sein.

Die Lagermetallschicht ist insbesondere auf Gleit- oder Reibelementen weiter dadurch gekennzeichnet, daß sie auf ein Trägerelement aus Stahl aufgebracht ist und die Lagermetall- schicht als Gleit- oder Reibschicht eine Aluminium/- Blei- oder Aluminium/Zinn-Dispersionslegierung und Hartteilchen in Form von Feinstteilchen aus Aluminiumoxid enthält.

Weiter kann die Lagermetallschicht vorteilhaft als Gleitschicht aus Blei-Zinn-Bronze mit 10 Gew.-% Blei, 10 Gew.-% Zinn, Rest Kupfer ausgebildet sein.

Die Lagermetallschicht kann weiter zweckmäßig mit einer Einlaufschicht aus Blei-Zinn-Legierung oder Blei-Zinn-Antimon-Legierung überdeckt sein.

Aufgrund des erfindungsgemäßen Verfahrens zur Schichtherstellung ist die Lagermetallschicht vollständig lamellenfrei, obwohl sie, wie übrigens jede thermische Spritzschicht, durch fladenförmige Einzelportionen kontinuierlich aufgebaut wird. Eine Stengelkristallbildung ist sicher ausgeschlossen. Ausscheidungskristalle bilden sich zwangsweise in gleichmäßiger Verteilung in der Schicht und kontinuierlich während des Schichtaufbaus. Das gilt auch für die zur Erzeugung einer bestimmten Schichthärte eingelagerten Hartstoffpartikel. Sie sind im Rahmen der Erfindung in genau dosierbarer und reproduzierbarer Menge in die Lagermetallschicht eingebaut, wahlweise mit konstantem oder über die Schichtdicke variablem Mischungsverhältnis. Durch diese Dispersionshärtung der Lagermetallschicht wird die Dauerfestigkeit gezielt erhöht, ohne daß ihre Anpassungsfähigkeit in der Einlaufphase oder ihre Einbettfähigkeit für Fremdpartikel verloren geht.

Besonders vorteilhafte und zweckmäßige Weiterbildungen bzw. Ausführungsformen des erfindungsgemäßen Verfahrens zum Herstellen einer Lagermetallschicht ergeben sich aus den Ansprüchen 3 bis 14.

Insbesondere wird die Lagermetallschicht vorteilhaft direkt auf dem Trägerkörper abgeschieden mit einer praktisch dem Festkörper entsprechenden Spritzschichtdichte. Ihre Restporosität ist deutlich unter 1%, so daß ein nachträglicher Verdichtungsprozeß nicht notwen- dig ist, wie er bisher für thermische Lagermetall- schichten notwendig war.

Zweckmäßig ist die Oberfläche des Trägerelements der erfindungsgemäßen Lagermetallschicht entfettet, leicht sandgestrahlt, mit einem übertragenen Lichtbogen sputtergereinigt und durch Vorwärmen entgast. Besonders für dicke Lagermetallschichten auf Stahlträgern kann es sehr vorteilhaft sein, wenn eine Vakuumentgasung der Substratoberfläche unmittelbar vor dem Aufspritzen erfolgte.

In bestimmten Anwendungsfällen kann vor dem Aufbringen der Lagermetallschicht eine Unterschicht aufgespritzt werden. Das wird dann empfehlenswert, wenn aufgrund mechanischer Anforderungen des Gleitlagerbaus ein bestimmtes Substratmaterial als Stützkörper für die Lagermetallschicht gewählt werden muß, auf dem diese trotz Sputterreinigung keinen ausreichenden Haftverbund erreicht.

In bevorzugter Ausführung erfolgt die Abscheidung der Lagermetallschicht bei gezielt eingestellter Oberflächentemperatur des Stützkörpers, so daß im Grenzbereich Substrat-Schicht eine Interdiffusion beschränkter Reichweite eintritt. Gleichzeitig kann die innere Strukturstabilität der Lagermetallschicht durch eine bessere Verschweißung der Schichtportionen zusätzlich gesteigert werden. Zum Abbau innerer Spannungen sollte die Abscheidetemperatur in der entstehenden Schicht konstant gehalten werden.

Vorteilhaft wird die erfindungsgemäße Lagermetallschicht unter ständigem Zuschalten eines übertragenen Lichtbogens mit hoher Beschichtungsgeschwindigkeit abgeschieden. Die Stützkörperoberfläche ist dabei als Anode geschaltet und gegenüber der Beschichtungsanlage elektrisch isoliert.

Der Strom des übertragenen Lichtbogens wirkt dabei als zusätzliche Energiequelle in der Plasmaflamme, wodurch bei sonst gleichen Plasmaflammparametern wesentlich mehr Lagermetallpulver aufgeschmolzen werden kann. Bis zu 200 g/min Spritzpulver sind bei z.B. 56 KW Brennerleistung abscheidbar, wenn 20 bis 40 A übertragener Lichtbogenstrom zugeschaltet wird. Besonders für die kontinuierliche Beschichtung von Stützkörperbändern sind hohe Abscheidegeschwindigkeiten erwünscht, da die gesamte Spritzschicht vorteilhafterweise in einer einzigen Schichtpassage aufgebracht werden soll.

Zweckmäßig sind die Legierungsbestandteile der Lagermetallschicht im verwendeten Spritzpulver vereint, beispielsweise in agglomerierter Form und/oder als vorlegiertes Material. Dabei ist die Kornform und Kornverteilung des Spritzpulvers durch die Aufgaben der Lagermetallschicht bestimmt und für das Verfahren zu ihrer Herstellung optimiert.

Das Spritzpulver wird vorteilhaft über mehrere Pulverleitungen zum Plasmabrenner transportiert und an verschiedenen Orten in die Flamme injektiert. Dabei können verschiedene Pulverarten gleichzeitig und/oder zeitlich nacheinander injektiert werden. Der Aufbau von dispersionsgehärteten Lagermetallschichten, mehrlagigen Sandwichstrukturen und Mischungen mit konstantem oder über die Schichtdicke variablem Mischungsverhältnis erfordern diese Möglichkeit. Für Lagermetallschichten aus AlPb-, AlSn- oder AlCd-Legierungen kann der Schichtaufbau z.B. so gewählt werden, daß sich in der Nachbarschaft der Stützkörperoberfläche reines Al befindet. Ein mittlerer Teil der Lagermetallschicht enthält die Lagermetall-Legierung, in der nicht-metallische Hartstoffe in Form von Feinstteilchen eingelagert sind, wobei deren Konzentration in Abhängigkeit von der Schichtdicke variiert. Die Deckschicht wird ohne Hartstoffteilchen aufgespritzt.

In bevorzugter Ausführung erfolgt die Abscheidung bei 50 bis 150 mbar (5-15 kPa) Umgebungsdruck mit möglichst geringem Partialdruck reaktiver Gase, um die chemische Zusammensetzung der Spritzpulver und der daraus erzeugten Lagermetallschicht identisch zu halten. In Sonderfällen ist aber auch eine gezielte Dotierung der Kammeratmosphäre oder der Plasmaflamme mit einem Reaktionsgas denkbar, um die Spritzschicht gegenüber den Ausgangsstoffen in festgelegter Form chemisch zu verändern. Beispielsweise kann mit Hilfe des $O_2$-Partialdruckes in der Spritzkammer die Schichthärte einer z.B. aus AlPb bestehenden Lagermetallschicht erhöht werden. Dabei wird aber die Schichthärte einer an Atmosphäre gespritzten Plasma Schicht (APS) bei weitem nicht erreicht. Eine Lamellenstruktur ist praktisch nicht sichtbar.

Bei der Herstellung der Lagermetallschicht auf Stützkörperelementen, z.B. Lagerschalen oder Kugelhülsen, wird bevorzugt die Abscheidung im Chargenbetrieb durchgeführt. Mit Hilfe anlageninterner Substratfördersysteme können dann mehrere Werkstücke nacheinander beschichtet werden, ohne daß die Kammer geöffnet werden muß.

Vorteilhaft werden für kleine Stützkörper Substratleiter und Bewegungssysteme so gestaltet, daß mehrere Werkstücke gleichzeitig mit einer erfindungsgemäßen Lagermetallschicht beschichtet werden können.

Das erfindungsgemäße Verfahren ist zur kontinuierlichen Abscheidung der Lagermetallschicht auf einem Metallband geeignet.

Bevorzugt wird in diesem Fall das Trägermaterialband über vor- und nachgeschaltete Schleusen, mit Hilfe von Haspeln, von Luft zu Luft durch die Beschichtungsanlage transportiert. Es liegt nahe, zusätzlich notwendige Behandlungsschritte während des Bandtransportes durchzuführen.

Die Erfindung wird im folgenden an Ausführungsbeisielen und anhand der Zeichnungen näher erläutert. In den Zeichnungen zeigen:

Fig. 1    eine schematische Darstellung einer VPS-Anlage mit den für die erfindungsgemäße Schichtherstellung entscheidenden Prozeßschritten,

Fig. 2    eine erfindungsgemäße mit Hilfe der VPS-Technik aufgebaute Lagermetallschicht,

Fig. 3    einen Stützkörper als Trägerelement in schematischer Form und Abmessungen für im Standguß nach dem Stand der Technik aufgebrachte Lagermetallschichten,

Fig. 4    den gleichen Stützkörper wie in Fig. 3 in Form und Abmessungen für erfindungsgemäß aufgebrachte Lagermetallschichten, und

Fig. 5    ein Schema einer VPS-Anlage für kontinuierliche Beschichtung von Stützkörperbändern mit einer Lagermetallschicht.

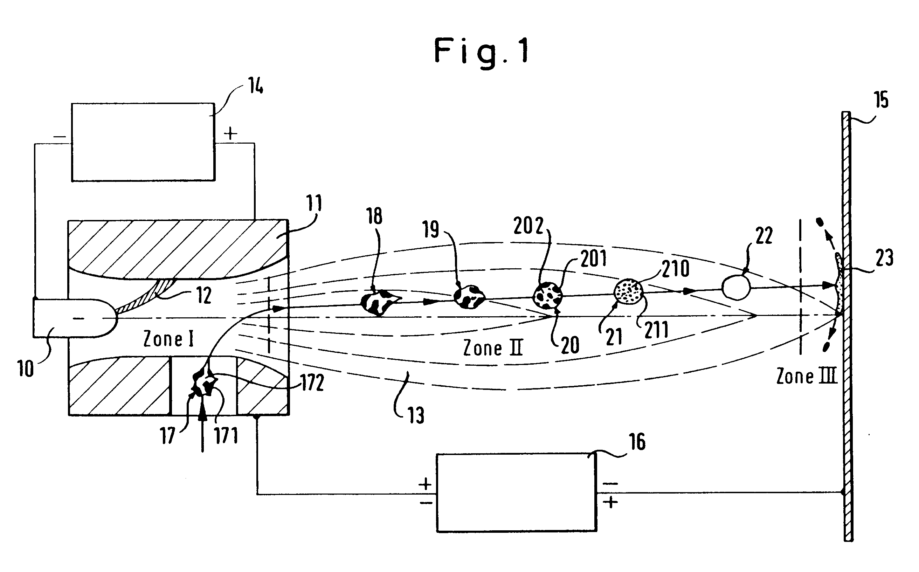

Für die Beschichtung einer Trägerelement- oder Stützkörperoberfläche mit einer Lagermetallschicht als Funktionsschicht wird, wie in Fig. 1 schematisch dargestellt, zwischen einer wassergekühlten Kathode 10 und Anode 11 ein Lichtbogen 12 betrieben, welcher das dem Brenner zugeführte Gas in eine Plasmaflamme 13 umwandelt. Zwischen Kathode 10 und Anode 11 ist eine Plasma-Stromversorgung 14, zwischen Anode 11 und zu beschichtendem Teil oder Trägerelement 15 eine Stromversorgung 16 für einen übertragenen Lichtbogen angeschlossen. In die Plasmaflamme 13 werden über Öffnungen in der Anode 11 Spritzpulverteilchen 17, 18, 19, 20, 21, 22 injektiert, beschleunigt, aufgeheizt, geschmolzen und als Tröpfchen auf die Oberfläche des Werkstücks oder Trägerelements 15 geschleudert. Form und innere

5

Struktur der Spritzpulverteilchen ändern sich dabei entscheidend, wodurch die erfindungsgemäße Lagermetallschicht erzeugt wird.

Der Atmosphärendruck kann bei 1000 mbar (100 kPa), der Inertgasdruck bei 900 mbar (90 kPa) und der Vakuumdruck bei 50 mbar (5 kPa) liegen.

Der kontinuierliche Beschichtungsprozeß ist durch Darstellung einzelner Spritzpulverteilchen in bestimmten Prozeßabschnitten erläutert.

Spritzpulverteilchen 17 zeigt schematisch Form und Struktur von Legierungen mit Mischungslücke im festen Zustand. Die einzelnen Legierungsbestandteile sind nicht homogen verteilt, sondern in Bereichen reiner Materialkonzentrationen 171, 172 beispielsweise für den Fall einer binären Bleibronze auskristallisiert. Um Hinweise für die Kristallitgröße zu geben, werden mögliche Größenordnungen genannt. Spritzpulverteilchen 17 hat einen Durchmesser von 10 bis 100 $\mu$m, bevorzugt 60 $\mu$m. Die einzelnen Kupfer- und Bleibereiche schwanken zwischen 1 und 25 $\mu$m, sind also für die Erzeugung eines homogenen Schichtaufbaus entsprechend der erfindungsgemäßen Lagermetallschicht viel zu grob.

Unmittelbar nach dem Eindringen in die Plasmaflamme 13 (Zone I) wird das Spritzpulverteilchen beschleunigt und sehr rasch erwärmt. Spritzpulverteilchen 18 hat den Schmelzpunkt noch nicht erreicht, ist also in Form und innerer Struktur gegenüber dem Spritzpulverteilchen 17 unverändert. Nur wenig später beginnt das Aufschmelzen, angedeutet durch Abrundung der Oberflächen-Konfiguration von Spritzpulverteilchen 19.

Spritzpulverteilchen 20 ist schon ganz geschmolzen, die Bereiche reiner Materialkonzentrationen 201, 202 beginnen mit weiter steigender Temperatur in Spritzpulverteilchen 21 durchzulegieren und vermindern ihre Größe in Bereichen 210, 211, um sich dann in Spritzpulverteilchen 22 in einer homogenen Schmelze praktisch aufzulösen (Zone II).

Entscheidend ist nun, daß die in dieser überhitzten Form homogen vorliegende Legierung von Materialien mit Mischungslücke (Zone III) auf die Oberfläche des Substrats oder Trägerelements 15 mit hoher kinetischer Energie aufprallt, sich zu einem flachen Fladen 23 verformt und dabei so rasch abgekühlt wird, daß die homogene Materialverteilung praktisch eingefroren wird. Zwangsweise entsteht so die erfindungsgemäße Lagermetallschicht, mit Kristalliten reiner Materialien deutlich unter 5 $\mu$m Größe.

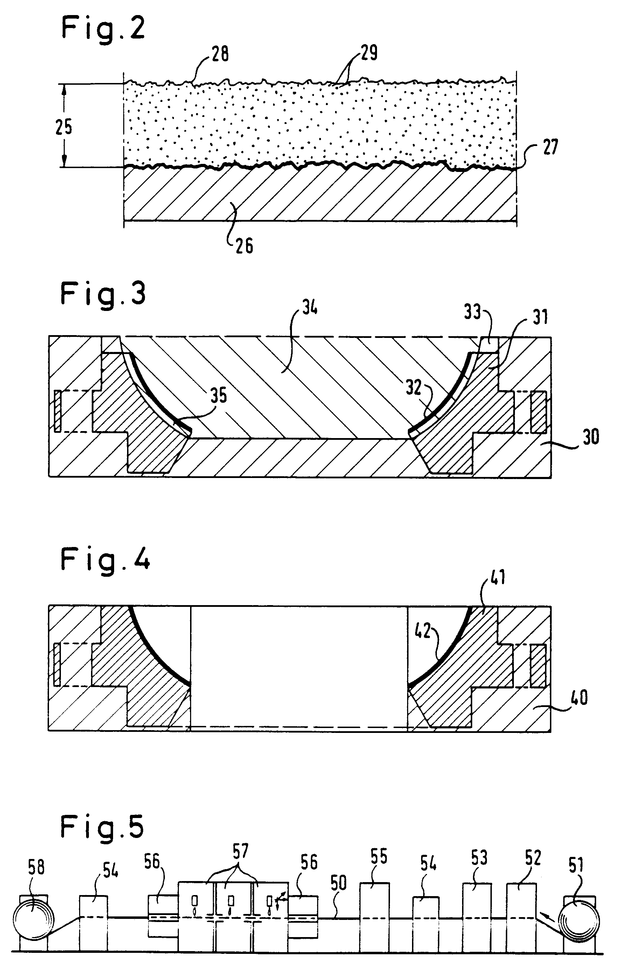

Unabhängig davon, ob mit vorlegiertem Spritzpulver oder mit Spritzpulverteilchen reiner agglomerierter Materialien gearbeitet wird, entsteht so eine Funktionsschicht oder Lagermetallschicht mit homogener Materialverteilung über die Gesamtschichtdicke, wie sie in Fig. 2 dargestellt ist. Eine Lagermetallschicht 25 ist auf einem durch Sandstrahlen leicht aufgerauhten Trägerelement 26 abgeschieden, welches unmittelbar vor der Beschichtung mit Hilfe eines übertragenen Lichtbogens (Stromversorgung 16) sputtergereinigt und auf eine festgelegte Oberflächentemperatur aufgeheizt wurde. Die Lagermetallschicht 25, im dargestellten Beispiel eine AIPb-Schicht (80 : 20 Gew.-%), haftet auf der Oberfläche des Trägerelements 26 sehr gut. Mit Hilfe einer etwa 1 $\mu$m, maximal 5 $\mu$m dicken Interdiffusionsschicht oder Zwischenschicht als Haftschicht 27 kann die Haftkraft noch weiter verstärkt werden. Dies kann in allen Fällen notwendig werden, in denen ein kontinuierlich beschichtetes Stützkörperband durch Stanzen vereinzelt und durch Rollen oder Pressen mit der Lagermetallschicht 25 in die eigentliche Lagergeometrie umgeformt werden muß. Für bestimmte Stützkörpermaterialen kann auch das Aufspritzen einer speziellen Haftschicht 27 notwendig werden, welche im gewählten Beispiel nicht gezeigt ist. Die Lagermetallschicht 25 selbst ist lamellenfrei, obwohl der Schichtaufbau durch einzelne Fladen 23 erfolgt. Durch die speziellen Reinheitsbedingungen der VPS-Technik haben die überhitzten Flüssigkeitströpfchen keinen Reaktionspartner, um oberflächlich zu oxidieren. Damit werden die einzelnen Schichtfladen nicht durch Oxidhäute getrennt. Substrattemperatur und Rekristallisation der Spritzpulverteilchen sind so aufeinander abgestimmt daß die Fladen 23 untereinander verbunden sind und eine sehr gute innere Strukturstabilität in der Lagermetallschicht 25 erzeugt wird.

Die so hergestellten Lagermetallschichten sind praktisch porenfrei. Die kinetische Auftreffenergie nachfolgender Tröpfchen ist so groß, daß sie Erstarrungsporen und die beim raschen Abkühlen entstehenden Materialschrumpfungen vollständig ausfüllen und ausgleichen.

Als besonders günstig erweist sich die höhere Prozeßgeschwindigkeit des VPS-Beschichtungsverfahrens für die Verminderung von Verdampfungsverlusten während der Schmelzphase. Insbesondere AIPb-Lagermetallschichten mit hohem Pb-Gehalt profitieren davon.

In der Lagermetallschicht 25 mit Oberfläche 28 sichtbare Pb-Ausscheidungen 29 sind sehr homogen verteilt und in ihrem Teilchendurchmesser deutlich unter 5 $\mu$m. Das gilt auch, wenn mit Mehrstofflegierungen gearbeitet wird und zu den binären Lagermetallen auf AIPb-, AISn- oder CuPb-Basis weitere Komponenten zugemischt sind:

a) Zusatz zur Verbesserung der Gleiteigenschaften (Pb, Sn, Sb, Bi)

b) Zusätze zur Legierungsverfestigung (Ni, Cu, Ti, B)

c) Zusätze zur Aushärtung der Al-Matrix (Si, Cu, C)

d) Zusätze zur Steigerung des Pb-Gehaltes unter Beibehaltung der homogenen Feinverteilung (Ni, Se, Zr, Te, Ce)

e) Zusätze zur Dispersionshärtung der Lagermetallschicht, zur Steigerung des Verschleißwiderstandes und Erhöhung der thermischen Belastbarkeit der Lagermetallschicht ($Al_2O_3$, $TiO_2$, $Cr_2O_3$ und ihre Mischungen, stabilisiertes $ZrO_2$ sowie $B_4C$, $SiC$, $AlN$ und $Si_3N_4$).

Ausscheidungskristallite und/oder Partikel der Schichtzusätze sind aufgrund der geringeren Konzentration meist kleiner als die Pb-Bereiche oder Pb-Ausscheidungen 29.

Als bevorzugte Lagermetallschichten werden verwendet:

1. AlPbSiSnCu - Legierungen, mit einem Pb-Gehalt zwischen 8 und 16%. Der Si-Anteil beträgt etwa 4%, Cu und Sn variieren zwischen 0,8 bis 2%.

2. AlSn - Legierungen, mit einem Sn-Gehalt bis 40%

3. CuPb - Legierungen, mit durch Se-, Te- oder Zr-Zusätzen bis auf 50% gesteigertem Pb-Gehalt.

In der nachfolgenden Tabelle sind die wesentlichen Eigenschaften der erfindungsgemäßen herstellbaren Lagermetallschichten im Vergleich zum Stand der Technik aufgelistet:

| Eigenschaften | Stand der Technik | erfindungsgemäße Lagermetallschicht |
|---|---|---|
| Schichtstruktur | Lamellar, mit gröberen Ausscheidungen, Neigung zu Stengelkristallen | praktisch homogene Elementenverteilung keine Dendriten |
| Kristallitgröße | 20 $\mu$m und deutlich mehr | < 5 $\mu$m |
| Porosität | 2 - 10% | 0 - 1% |
| Mittlere Rauhigkeit | 10 - 30 $\mu$m | 5 - 10 $\mu$m |
| Haftfestigkeit | 30 - 50 N/mm$^2$ | 50 - 80 N/mm$^2$ |
| Härte HV | 80 - 130 N/mm$^2$ | 40 - 80 N/mm$^2$ |
| Dauerfestigkeit | 50 - 70 N/mm$^2$ | 70 - 90 N/mm$^2$ |

Als Dauerfestigkeit ist dabei der Wert der Lagerbelastung in N/mm$^2$ definiert, bei welchem $60 \cdot 10^6$ Lastwechsel ohne Risse oder Ausbrüche in der Lagermetallschicht überstanden werden.

Aufgrund der hohen Spritzschichtdichte und verbesserter Oberflächengüte der erfindungsgemäßen Lagermetallschicht sind keine nachträglichen Maßnahmen zur Verdichtung notwendig. Die mechanische Nacharbeit zur Herstellung einer Gleitfläche ist dagegen stark vereinfacht.

Wie schon erwähnt, lassen sich mit dem erfindungsgemäßen Hertellungsverfahren für Lagermetallschichten auch Schichtsysteme, Mehrfachstrukturen und gradierte Spritzschichten abscheiden, unter Ausnützung der spezifischen Vorteile der VPS-Technik.

Neben den Qualitätsverbesserungen in der Lagermetallschicht als Funktionsschicht werden eine ganze Reihe zusätzlicher Vorteile durch die Anwendung der Erfindung erschlossen

Fig. 3 zeigt schematisch eine Zylindertrommel, mechanisch aus einer Ausgangsgrundform 30 ausgearbeitet. Die Zylindertrommel benötigt eine sphärische Lagerschale 31, welche im Standgußverfahren hergestellt werden muß. Die Stützkörperform ist nur grob mechanisch vorgearbeitet. Damit die ganze sphärische Lagerfläche gleichmäßig mit einer Lagermetallschicht 32 bedeckt werden kann, muß ein Stützrand 33 für den Standguß weit hochgezogen werden. Die gesamte sphärische Form muß mit Gußmaterial 34 ausgegossen werden, wobei fast das gesamte Gußmaterial 34 später mechanisch wieder entfernt werden muß. Zusätzliches Gußmaterial 35 wird benötigt, da die Struktur der Lagermetallschicht 32 erst in einem bestimmten Abstand vom Boden die geforderten Gleitschichteigenschaften entwickelt. Zwangsweise wird die Lagermetallschicht sehr dick. Ein Teil der Stützkörperkonstruktion ist folglich in Lagermetall ausgeführt, wenn aus der Ausgangsgrundform 30 die Zylindertrommel mechanisch herausgearbeitet wird. Toleranzen bei der mechanischen Endbearbeitung müssen im Lagermetall aufgefangen werden.

Wird dagegen die Lagermetallschicht als Funktionsschicht erfindungsgemäß aufgespritzt, so kann, wie in Fig. 4 schematisch gezeigt, der gesamte Stützkörper mechanisch komplett endbearbeitet werden. Schon die Ausgangsgrundform 40 ist wesentlich einfacher und materialsparender. Anstelle eines Blockes ist Rohrmaterial verwendbar. Mit hoher Präzision wird die sphärische Lagerschale 41 so präpariert, daß die aufgespritzte Lagermetallschicht 42 nur noch oberflächlich poliert werden muß. Die Einsparungen an Material und Bearbeitungszeit übertreffen die Beschichtungskosten bei weitem. Oft können unter diesen günstigen Bedingungen billigere Trägermaterialien verwendet werden, da die aufgespritzte Lagermetallschicht 42 eine Lagermetallschicht 32 aus Standguß in den Schichteigenschaften übertrifft.

Für die Herstellung der genannten Lagermetallschichten können VPS-Systeme nach dem Stand der Technik eingesetzt werden, unter Sicherstellung bestimmter Qualitätsanforderungen. Wie schon erwähnt, werden für Stützkörperbeschichtungen Chargenbeschichtungsanlagen mit internen Substratfördersystemen bevorzugt, wie sie heute Stand der Technik sind. Bei hohen Stückzahlen formidentischer Stützkörper kann eine Schleusenanlage wirtschaftlicher werden.

Fig. 5 zeigt schematisch ein Beschichtungssystem, welches bevorzugt für eine kontinuierliche Beschichtung von Stützmaterial in Endlosbandform eingesetzt wird. Dabei sind zusätzliche Arbeitsschritte ebenfalls am Band 50 durchführbar. Von einer Haspel 51 kommend wird das Band 50 in einer Sandstrahlanlage 52 leicht aufgerauht, danach in einer Ultraschallanlage 53 gereinigt und entfettet. Scheren 54 und eine Schweißanlage 55 sorgen für ein Endlosband, welches über Schleusenkammern 56 von Luft zu Luft durch eine Beschichtungskammer 57 transportiert und von einer zweiten Haspel 58 aufgewickelt wird. In der Beschichtungskammer 57 erfolgen Sputterreinigung, Aufheizung und Beschichtung von einzelnen Bandabschnitten bestimmter Länge nacheinander mit einem Brenner im Stop- and Go-Verfahren.

Mit Hilfe computerkontrollierter Bewegungssysteme werden die erforderlichen Bewegungsabläufe reproduzierbar durchgeführt. Aber auch ein gleichzeitiger Ablauf aller Schritte unter kontinuierlichem Bandtransport ist möglich, wozu dann allerdings verschiedene Brenner gleichzeitig in Betrieb sind. Sie werden in diesem Fall synchron über das Band 58 bewegt. Ein erstes Brennersystem sputtert z.B. die Substratoberfläche, während ein zweites System die Dispersionslegierung aufspritzt und ein drittes System eine weichere Deckschicht zur Verbesserung des Einlaufverhaltens der Funktionsschicht.

## Patentansprüche

1.  Verfahren zum Aufbringen einer Lagermetallschicht aus einer Suspensionslegierung, wobei wenigstens zwei der metallischen legierungsbestandteile eine Legierung mit einer Mischungslücke bilden und der in der Legierung dispergierte Stoff mit einem der beiden metallischen legierungsbestandteile identisch ist, auf ein Trägerelement, bei welchem die Legierungsbestandteile im Plasmaspritzverfahren in Pulverform in den Plasmastrahl eingeführt werden und die Pulverteilchen im Plasmastrahl aufgeschmolzen und legiert werden, dadurch **gekennzeichnet**, daß die legierten Teilchen auf der Oberfläche des Trägerelements so rasch abgekühlt werden, daß die homogene Materialverteilung eingefroren wird, wodurch die Legierungsbestandteile im Bereich der Mischungslücken eine homogene, poren-, lamellen- und stengelkristallfreie Schicht bilden, in der die größten Abmessungen der Feinteilchen und Ausscheidungskristallite etwa 5 μm nicht überschreiten.

2.  Verfahren nach Anspruch 1, dadurch **gekennzeichnet,** daß die Lagermetallschicht durch Vakuum-Plasma-Spritzen (VPS) hergestellt wird.

3.  Verfahren nach Anspruch 1 oder 2, dadurch **gekennzeichnet,** daß vor Beginn des Aufbaus der Lagermetallschicht die zu beschichtende Oberfläche des Trägerelements aufgerauht und/oder mittels eines übertragenen Lichtbogens im Sputterverfahren gereinigt und das Trägerelement auf eine vorher festgelegte Temperatur gebracht wird.

4.  Verfahren nach Anspruch 2 oder 3, dadurch **gekennzeichnet,** daß der Aufbau der Lagermetallschicht unter Aufrechterhaltung eines zum Trägerelement übertragenen Lichtbogens ausgeführt wird.

**5.** Verfahren nach einem der Ansprüche 1 bis 4,
dadurch **gekennzeichnet,** daß die Bestandteile der Lagermetallschicht als Feinteilchen zu Pulverteilchen agglomeriert werden und dieses Agglomerat in den Plasmastrahl eingeführt und in diesem zumindest zum wesentlichen Teil aufgeschmolzen und legiert wird.

**6.** Verfahren nach einem der Ansprüche 1 bis 4,
dadurch **gekennzeichnet,** daß für die Bildung der Trägermetallschicht deren Bestandteile als vorlegiertes Spritzpulver in den Plasmastrahl eingeführt und in diesem zumindest zum wesentlichen Teil aufgeschmolzen und legiert werden.

**7.** Verfahren nach einem der Ansprüche 1 bis 6,
dadurch **gekennzeichnet,** daß dem Plasmagas und/oder der Kammeratmosphäre während des Aufbaus der Lagermetallschicht ein auf mindestens einen Legierungsbestandteil der Legierung chemisch einwirkendes Reaktionsgas zu zumindest teilweiser Überführung des Legierungsbestandteiles in eine gewünschte chemische Verbindung zugesetzt wird.

**8.** Verfahren nach einem der Ansprüche 1 bis 7,
dadurch **gekennzeichnet,** daß dem Plasmastrahl während des Aufbaus der Lagermetallschicht außer deren Legierungsbestandteilen zusätzliche Hartteilchen oxidischer und/oder nicht-oxidischer Art in vorher festgelegter gegebenenfalls zeitlich variierter Menge zugeführt werden.

**9.** Verfahren nach einem der Ansprüche 1 bis 8,
dadurch **gekennzeichnet,** daß zur Beschichtung eines bandförmigen Trägers oder einer Mehrzahl von auf einem Support angebrachten Trägerelementen mit einer Lagermetallschicht dieser bandförmige Träger bzw. der Support mit den Trägerelementen in kontinuierlichem Durchlauf eine Anzahl von hintereinander angeordneten Plasma-Spritzstationen ohne zwischenzeitliche Berührung mit der Außenatmosphäre durchläuft.

**10.** Verfahren nach einem der Ansprüche 1 bis 9,
dadurch **gekennzeichnet**, daß vor dem Aufbringen der Lagermetallschicht eine Zwischenschicht als Haftschicht auf das Trägerelement aufgebracht wird.

**11.** Verfahren nach Anspruch 10,
dadurch **gekennzeichnet,** daß für die Haftschicht der metallische Legierungsbestandteil der Lagermetallschicht mit dem höheren Schmelzpunkt verwendet wird.

**12.** Verfahren nach Anspruch 11,
dadurch **gekennzeichnet,** daß für die Beschichtung eines Trägerelements aus Stahl mit einer Lagermetallschicht aus Aluminium und Blei oder Zinn, Antimon Aluminium für die Haftschicht verwendet wird.

**13.** Verfahren nach einem der Ansprüche 1 bis 12,
dadurch **gekennzeichnet,** daß die Lagermetallschicht mit 80 Gew.-% Aluminium und 20 Gew.-% Blei oder einem ähnlichen Metall als Legierungsbestandteile aufgebracht wird.

**14.** Verfahren nach einem der Ansprüche 1 bis 13,
dadurch **gekennzeichnet,** daß die Lagermetallschicht nach dem Plasma-Spritzen durch Druckausübung durch Walzen verdichtet und in ihrer freien Oberfläche geglättet wird.

**15.** Lagermetallschicht (25; 42) aus einer Suspensions
legierung, die in einem Verfahren nach einem der Ansprüche 1 bis 14 direkt oder über eine Zwischenschicht (27) auf ein Trägerelement (15, 26; 41) aufgebracht ist, wobei wenigstens zwei der metallischen Legierungsbestandteile eine Legierung mit einer Mischungslücke bilden und der in der Legierung dispergierte Stoff mit einem der beiden metallischen Legierungsbestandteile identisch ist,
dadurch **gekennzeichnet,** daß die Legierung aus der Gruppe Aluminium/Blei-, Aluminium/Zinn- und Kupfer/Bleilegierungen ausgewählt ist, und daß die Legierungsbestandteile im Bereich der Mischungslücken eine homogene, poren-, lamellen- und stengelkristallfreie Schicht bilden, in der die größten Abmessungen der Feinteilchen und Ausscheidungskristallite etwa 5 $\mu$m nicht überschreiten.

**16.** Lagermetallschicht nach Anspruch 15,
dadurch **gekennzeichnet**, daß das Mischungsverhältnis der Feinteilchen aus den Legierungsbestandteilen über die Dicke der Lagermetallschicht (25; 42) variiert ist.

**17.** Lagermetallschicht nach Anspruch 15 oder 16,
dadurch **gekennzeichnet,** daß sie dem einen oder anderen Legierungsbestandteil anfänglich beigegebene oder beim Aufbau der Lagermetallschicht (25; 42) zusätzlich zugeführte Hartteilchen als dispersionsverfestigende Feinstteilchen in festgelegtem Beigabeverhältnis zur Erzielung der Lagermetallschicht und statistischer Verteilung enthält.

**18.** Lagermetallschicht nach Anspruch 17,
dadurch **gekennzeichnet,** daß das Beigabeverhältnis der Hartteilchen zwischen etwa 1 Vol.-% und
etwa 5 Vol.-% bezogen auf das Volumen der Lagermetallschicht (25; 42) beträgt.

**19.** Lagermetallschicht nach Anspruch 17 oder 18,
dadurch **gekennzeichnet,** daß das Beigabeverhältnis der Hartteilchen über die Dicke der Lagermetallschicht (25; 42) variiert ist.

**20.** Lagermetallschicht nach einem der Ansprüche 15 bis 19, insbesondere auf Gleit- oder Reibelementen,
dadurch **gekennzeichnet,** daß sie auf ein Trägerelement (15; 26; 41) aus Stahl aufgebracht ist und die
Lagermetallschicht (25; 42) als Gleit- oder Reibschicht eine Aluminium/Blei- oder Aluminium/-Zinn-
Dispersionslegierung und Hartteilchen in Form von Feinstteilchen aus Aluminiumoxid enthält.

**21.** Lagermetallschicht nach einem der Ansprüche 15 bis 20,
dadurch **gekennzeichnet,** daß sie als Gleitschicht aus Blei-Zinn-Bronze mit 10 Gew.-% Blei, 10 Gew.-
% Zinn, Rest Kupfer ausgebildet ist.

**22.** Lagermetallschicht nach einem der Ansprüche 15 bis 21,
dadurch **gekennzeichnet,** daß sie mit einer Einlaufschicht aus Blei-Zinn-Legierung oder Blei-Zinn-
Antimon-Legierung überdeckt ist.

**Claims**

**1.** A process for the application of a bearing metal layer composed of a suspension alloy, wherein at least
two of the metallic alloy constituents form an alloy with a miscibility gap, and the substance dispersed
in the alloy is identical to one of the two metallic alloy constituents, to a support member, wherein the
alloy constituents are introduced in powder form into the plasma jet in a plasma spraying process and
the powder particles are fused and alloyed in the plasma jet, characterised in that the alloyed particles
are rapidly cooled on the surface of the support member in such manner that the homogeneous
material distribution is frozen in, whereby, in the region of the miscibility gaps, the alloy constituents
form a homogeneous, pore-free, lamellae-free and "spike"-crystal-free layer in which the maximum
dimensions of the fine particles and precipitation crystallites do not exceed approximately 5 microns.

**2.** A process as claimed in Claim 1, characterised in that the bearing metal layer is produced by vacuum
plasma spraying (VPS).

**3.** A process as claimed in Claim 1 or 2, characterised in that before the beginning of the build-up of the
bearing metal layer, the surface of the support member which is to be coated is roughened and/or
sputter-cleaned by a transferred arc and the support member is bought to a predetermined temperature.

**4.** A process as claimed in Claim 2 or 3, characterised in that the bearing metal layer is built up whilst
maintaining an arc transferred to the support member.

**5.** A process as claimed in one of Claims 1 to 4, characterised in that the constituents of the bearing
metal layer in the form of fine particles are agglomerated to form powder particles and this agglomerate
is introduced into the plasma jet in which it is at least substantially fused and alloyed.

**6.** A process as claimed in one of Claims 1 to 4, characterised in that for the formation of the support metal layer, the constituents thereof are introduced in the form of pre-alloyed spray powder into the plasma jet, in which they are at least substantially fused and alloyed.

**7.** A process as claimed in one of Claims 1 to 6, characterised in that during the build-up of the bearing metal layer a reactive gas which chemically acts upon at least one constituent of the alloy is added to the plasma gas and/or to the chamber atmosphere for the at least partial conversion of the alloy constituent into a desired chemical compound.

**8.** A process as claimed in one of Claims 1 to 7, characterised in that during the build-up of the bearing metal layer the plasma jet is supplied not only with the alloy constituents of bearing metal layer but additionally with oxidic and/or non-oxidic hard particles in a pre-determined, optionally time-varied quantity.

**9.** A process as claimed in one of Claims 1 to 8, characterised in that for the coating of a strip-like support member, or a plurality of support members arranged on a substrate, with a bearing metal layer, this strip-like support member or substrate comprising the support members passes continuously through a number of series-arranged plasma spraying stations without intervening contact with the outer atmosphere.

**10.** A process as claimed in one of Claims 1 to 9, characterised in that prior to the application of the bearing metal layer, an intermediate layer is applied as bonding layer to the support member.

**11.** A process as claimed in Claim 10, characterised in that the metallic alloy constituent of the bearing metal layer with the higher melting point is used for the bonding layer.

**12.** A process as claimed in Claim 11, characterised in that for the coating of a support member composed of steel with a bearing metal layer of aluminium and lead or tin, antimony aluminium is used for the bonding layer.

**13.** A process as claimed in one of Claims 1 to 12, characterised in that the bearing metal layer is applied with 80 weight % aluminium and 20 weight % lead or a similar metal as alloy constituents.

**14.** A process as claimed in one of Claims 1 to 13, characterised in that following the plasma spraying the bearing metal layer is consolidated by the application of pressure by rolling and is smoothed on its free surface.

**15.** A bearing metal layer (25; 42) composed of a suspension alloy which is applied, by a process as claimed in one of Claims 1 to 14, directly or via an intermediate layer (27), to a support member (15, 26; 41), wherein at least two of the metallic alloy constituents form an alloy with a miscibility gap, and the substance dispersed in the alloy is identical to one of the two metallic alloy constituents, characterised in that the alloy is selected from the group aluminium/lead-, aluminium/tin- and copper/lead alloys, and that in the region of the miscibility gaps the alloy constituents form a homogeneous, pore-free, lamellae-free and "spike"-crystal-free layer in which the maximum dimensions of the fine particles and precipitation crystallites do not exceed approximately 5 microns.

**16.** A bearing metal layer as claimed in Claim 15, characterised in that the mixture ratio of the fine particles of the alloy constituents is varied across the thickness of the bearing metal layer (25; 42).

**17.** A bearing metal layer as claimed in Claim 15 or 16, characterised in that it contains hard particles initially added to one or the other of the alloy constituents or additionally supplied in the build-up of the bearing metal layer (25; 42), as dispersion-consolidating, ultra-fine particles in a predetermined addition ratio for the formation of the bearing metal layer, and statistical distribution.

**18.** A bearing metal layer as claimed in Claim 17, characterised in that the addition ratio of the hard particles amounts to between approximately 1 vol.% and approximately 5 vol.% relative to the volume of the bearing metal layer (25; 42).

**19.** A bearing metal layer as claimed in Claim 17 or 18, characterised in that the addition ratio of the hard particles is varied across the thickness of the bearing metal layer (25; 42).

**20.** A bearing metal layer as claimed in one of Claims 15 to 19, in particular on sliding or friction elements, characterised in that it is applied to a support member (15; 26; 41) made of steel, and the bearing metal layer (25; 42) contains, as sliding or friction layer, an aluminium/lead or aluminium/tin dispersion alloy and hard particles in the form of ultra-fine particles of aluminium oxide.

**21.** A bearing metal layer as claimed in one of Claims 15 to 20, characterised in that it has the form of a sliding layer of lead-tin-bronze containing 10 weight % lead, 10 weight % tin and the remainder copper.

**22.** A bearing metal layer as claimed in one of Claims 15 to 21, characterised in that it is covered with a running-in layer of lead-tin alloy or lead-tin-antimony alloy.

**Revendications**

**1.** Procédé pour, à partir d'un alliage, constitué d'une suspension, dans lequel au moins deux des constituants métalliques de l'alliage forment un alliage présentant une insuffisance de miscibilité et dans lequel la substance dispersée dans l'alliage est identique à l'un des deux constituants métalliques de l'alliage, rapporter une couche de métal antifriction sur un élément support, procédé dans lequel on introduit les constituants de l'alliage par le procédé de projection au jet de plasma, sous forme pulvérulente dans le jet de plasma, puis l'on fait fondre les particules pulvérulentes dans le jet de plasma et on les fait s'allier,

procédé caractérisé par le fait que les particules alliées se refroidissent si rapidement à la surface de l'élément support que la répartition homogène du matériau se fige, ce par quoi les constituants de l'alliage forment dans la zone des insuffisances de miscibilité une couche homogène, exempte de pores, de lamelles et de cristaux colonnaires, dans laquelle les plus grandes dimensions de fines particules et des cristallites précipitées ne dépassent pas environ 5 $\mu$m.

**2.** Procédé selon la revendication 1,

caractérisé par le fait que l'on fabrique la couche de métal antifriction par projection au jet de plasma sous vide (VPS).

**3.** Procédé selon la revendication 1 ou 2,

caractérisé par le fait qu'avant le début de la construction de la couche de métal antifriction, on rend rugueuse la surface de l'élément support à revêtir et/ou on la nettoie par le procédé de vaporisation sous vide au moyen d'un arc électrique passant entre l'anode de l'arc à plasma et cette surface et on porte l'élément support à une température déterminée à priori.

**4.** Procédé selon la revendication 2 ou 3,

caractérisé par le fait que l'on procède à la construction de la couche de métal antifriction en maintenant un arc électrique entre l'anode de l'arc à plasma et l'élément support.

**5.** Procédé selon l'une des revendications 1 à 4,

caractérisé par le fait que les constituants de la couche de métal antifriction, sous forme de fines particules, s'agglomèrent pour donner des particules pulvérulentes et que l'on introduit cet agglomérat dans le jet de plasma où il fond au moins en ce qui concerne sa partie essentielle et donne un alliage.

**6.** Procédé selon l'une des revendications 1 à 4,

caractérisé par le fait que pour la formation de la couche de métal support, on introduit ses constituants, sous forme de poudre préalliée à projeter, dans le jet de plasma où elle fond au moins en ce qui concerne sa partie essentielle et donne un alliage.

**7.** Procédé selon l'une des revendications 1 à 6,

caractérisé par le fait qu'au gaz de plasma et/ou à l'atmosphère de la chambre pendant la construction de la couche de métal antifriction, on ajoute un gaz de réaction agissant chimiquement sur au moins un constituant de l'alliage pour convertir au moins partiellement le constituant de l'alliage en une liaison chimique désirée.

**8.** Procédé selon l'une des revendications 1 à 7,
caractérisé par le fait qu'en plus de ses constituants de l'alliage, on amène dans le jet de plasma, pendant la construction de la couche de métal antifriction, des particules dures supplémentaires, de type oxydant et/ou non oxydant, en proportion déterminée à priori, éventuellement variant dans le temps.

**9.** Procédé selon l'une des revendications 1 à 8,
caractérisé par le fait que pour revêtir d'une couche de métal antifriction un support en forme de bande ou une pluralité d'éléments supports rapportés sur un soutien, ce support en forme de bande ou le soutien présentant les éléments supports, parcourt en passage continu un certain nombre de stations de projection au jet de plasma disposées l'une derrière l'autre, sans contact intermédiaire avec l'atmosphère extérieure.

**10.** Procédé selon l'une des revendications 1 à 9,
caractérisé par le fait qu'avant de rapporter la couche de métal antifriction, on rapporte sur l'élément support une couche intermédiaire en tant que couche d'adhérence.

**11.** Procédé selon la revendication 10,
caractérisé par le fait que pour la couche d'adhérence on emploie le constituant métallique de l'alliage de la couche de métal antifriction présentant le point de fusion le plus élevé.

**12.** Procédé selon la revendication 11,
caractérisé par le fait que pour revêtir d'une couche de métal antifriction constituée d'aluminium et de plomb ou d'étain un élément support en acier, on emploie pour la couche d'adhérence un alliage antimoine aluminium.

**13.** Procédé selon l'une des revendications 1 à 12,
caractérisé par le fait que l'on rapporte la couche de métal antifriction contenant 80% en poids d'aluminium et 20% en poids de plomb ou d'un métal semblable comme constituants de l'alliage.

**14.** Procédé selon l'une des revendications 1 à 13,
caractérisé par le fait qu'après la projection au jet de plasma, on densifie la couche de métal antifriction en exerçant une pression au moyen de rouleaux et qu'on lisse la surface libre.

**15.** Couche de métal antifriction (25;42) à partir d'un alliage en suspension que l'on rapporte sur un élément support (15,26;41) dans un procédé conforme à l'une des revendications 1 à 14, directement ou par l'intermédiaire d'une couche intermédiaire (27), étant précisé qu'au moins deux des constituants métalliques de l'alliage forment un alliage présentant une insuffisance de miscibilité et que la substance dispersée dans l'alliage est identique à l'un des deux constituants métalliques de l'alliage, couche caractérisée par le fait que l'alliage est choisi dans le groupe des alliages aluminium/plomb, aluminium/étain et cuivre/plomb, et par le fait que les constituants de l'alliage forment dans la zone des insuffisances de miscibilité une couche homogène, exempte de pores de lamelles et de cristaux colonnaires, dans laquelle les plus grandes dimensions de fines particules et des cristallites précipitées ne dépassent pas environ 5 $\mu$m.

**16.** Couche de métal antifriction selon la revendication 15,
caractérisée par le fait que l'on fait varier le rapport de mélange des fines particules constituées des constituants de l'alliage en fonction de l'épaisseur de la couche de métal antifriction (25;42).

**17.** Couche de métal antifriction selon la revendication 15 ou 16,
caractérisée par le fait que, pour l'obtention de la couche de métal antifriction et pour la répartition statistique, elle reçoit, sous forme de particules très fines se fixant par dispersion, dans un rapport d'addition déterminé, des particules dures ajoutées au début à l'un ou à l'autre des constituants de l'alliage ou amenées en supplément lors de la construction de la couche de métal antifriction (25;42).

**18.** Couche de métal antifriction selon la revendication 17,
caractérisée par le fait que le rapport d'addition des particules dures vaut entre environ 1 Vol.-% et 5 Vol.-%, rapporté au volume de la couche de métal antifriction (25;42).

**19.** Couche de métal antifriction selon la revendication 17 ou 18,
caractérisée par le fait que l'on fait varier le rapport d'addition des particules dures en fonction de l'épaisseur de la couche de métal antifriction (25;42).

**20.** Couche de métal antifriction selon l'une des revendications 15 à 19, en particulier sur des éléments travaillant au glissement ou au frottement,
caractérisée par le fait qu'elle est rapportée sur un élément support (15;26;41) en acier et que la couche de métal antifriction (25;42) contient, comme couche de glissement ou de frottement, un alliage constitué d'une dispersion aluminium/plomb ou aluminium/étain et des particules dures sous forme de particules très fines d'oxyde d'aluminium.

**21.** Couche de métal antifriction selon l'une des revendications 15 à 20,
caractérisée par le fait que, en tant que couche de glissement, elle est formée de bronze-plomb-étain avec 10% en poids de plomb, 10% en poids d'étain, le reste de cuivre.

**22.** Couche de métal antifriction selon l'une des revendications 15 à 21,
caractérisée par le fait qu'elle est recouverte d'une couche de rodage constituée d'un alliage plomb-étain ou d'un alliage plomb-étain-antimoine.

# Fig.1

EP 0 270 670 B1

# Fig.2

# Fig.3

# Fig.4

# Fig.5